# EUROPÄISCHE PATENTSCHRIFT

(11) **EP 3 714 153 B1**
(45) Veröffentlichungstag und Bekanntmachung des Hinweises auf die Patenterteilung: **30.03.2022**
(21) Anmeldenummer: 17811500.2
(22) Anmeldetag: 24.11.2017
(51) Int. Cl.: F02M 26/11, F02M 26/54, F02M 26/66, F16K 31/04, F16K 31/52, F16K 31/53, F16K 31/56, F02B 37/18

(54) **VENTILVORRICHTUNG MIT EINEM AKTUATOR SOWIE VERFAHREN ZUR MONTAGE EINER DERARTIGEN VENTILVORRICHTUNG**
VALVE DEVICE WITH ACTUATOR AND METHOD FOR ASSEMBLY OF SUCH VALVE DEVICE
DISPOSITIF DE VANNE AVEC ACTIONNEUR ET PROCÉDÉ D'ASSEMBLAGE D'UN TEL DISPOSITIF DE VANNE

(43) Veröffentlichungstag der Anmeldung: 30.09.2020
(73) Patentinhaber: Pierburg GmbH, 41460 Neuss (DE)
(72) Erfinder: HEMSING, Axel, 40545 Düsseldorf (DE); SIMONS, Norbert, 40233 Düsseldorf (DE)
(74) Vertreter: terpatent Patentanwälte ter Smitten Eberlein-Van Hoof Rütten Daubert
(86) Internationale Anmeldenummer: PCT/EP2017/080323
(87) Internationale Veröffentlichungsnummer: WO 2019/101327

(56) Entgegenhaltungen:
- DE-A1- 10 125 094
- DE-A1-102010 020 115
- DE-A1-102010 025 538
- DE-A1-102011 001 535
- DE-T2- 60 120 436
- DE-T2- 60 120 436

## Beschreibung

Die Erfindung betrifft eine Ventilvorrichtung mit einem Aktuator, welcher einen Elektromotor und ein Getriebe, welches als Abtriebsglieder zumindest ein Zahnrad mit einem dezentral gelagertem Exzenterausgangsbolzen und eine Kulisse, die mit dem Exzenterausgangsbolzen zusammenwirkt, aufweist, und eine mit der Kulisse direkt verbundene Ventilstange umfasst, an der ein Ventilkörper befestigt ist, der über ein Federelement vorgespannt ist und durch Betätigung des Aktuators gegen die Vorspannrichtung des Federelements axial bewegbar ist, wobei der Ventilkörper im Betrieb zwischen einer ersten Betriebsstellung, in der der Ventilkörper einen maximalen Abstand zum Aktuator aufweist und einer zweiten Betriebsstellung, in der der Ventilkörper einen minimalen Abstand zum Aktuator aufweist, bewegbar ist, wobei alle Betriebsstellungen des Exzenterausgangsbolzens zwischen einem unteren und einem oberen Totpunkt auf einer Seite einer Achse liegen, welche durch den unteren und den oberen Totpunkt des Exzenterausgangsbolzens verläuft.

Für Verbrennungskraftmaschinen werden Ventilvorrichtungen mit Aktuatoren in verschiedenen Ausführungen und für verschiedene Zwecke verwendet. Im Abgasbereich eingesetzte Ventile und insbesondere Abgasrückführventile dienen der Reduktion von Abgasemissionen. Dabei werden an den jeweiligen Betriebszustand der Brennkraftmaschine angepasste Abgasmengen zur Reduzierung der umweltschädlichen Anteile in die Zylinder der Verbrennungskraftmaschine zurückgeführt. Derartige Stellvorrichtungen für Abgasrückführventile weisen üblicherweise einen zumeist elektromotorischen Aktuator auf, der über ein Getriebe mit einer Ventilstange in Wirkverbindung steht, auf der ein Ventilkörper befestigt ist, der auf einen Ventilsitz abgesenkt werden kann oder von diesem abgehoben werden kann.

Es sind verschiedene Stellvorrichtungen für Ventile aus dem Stand der Technik bekannt. Eine derartige Vorrichtung ist beispielsweise in der DE 10 2010 025 538 A1 beschrieben. Die hierhin beschriebene Stellvorrichtung weist einen Elektromotor, der ein Drehmoment erzeugt, und ein Getriebe auf, welches einen dezentral am Abtriebsrad des Getriebes gelagerten Exzenterausgangsbolzen aufweist. Auf diesem Bolzen ist ein Kugellager befestigt, das in einer Kulisse abläuft, die in einem Kopplungselement ausgebildet ist, welches an einer Seite drehfest am Gehäuse befestigt ist und an dessen gegenüberliegenden Ende eine Ventilstange schwenkbar befestigt ist, sodass die Rotationsbewegung des Aktuators in eine weitgehend translatorische Bewegung umgewandelt wird.

In der EP 1 091 112 A2 ist eine Ventileinheit mit einer Antriebseinheit, einer Getriebeeinheit und einer Ventilstange mit Ventilkörper beschrieben, wobei ein Exzenter als Ausgangsglied fungiert, auf dessen Ausgangsbolzen ein Lagerelement angeordnet ist, das in einer Kulisse geführt wird und an der Ventilstange fixiert ist, sodass trotz der Exzentrizität des Kupplungsteils eine gerade, lineare Bewegung der Ventilstange und somit des Ventilkörpers realisiert ist. Durch ein Federelement ist eine automatische Rückstellung des Ventilkörpers in Schließstellung gewährleistet.

Nachteilig ist es bei den bekannten Ventilvorrichtungen, dass der Ventilkörper bei der Montage der Vorrichtung in einem Strömungsgehäuse einer Verbrennungskraftmaschine durch eine Bestromung des Aktuators in eine Offenstellung des Ventilkörpers zum Ventilsitz bewegt werden muss, um Beschädigungen des gesamten Ventils während des Einbaus bei nach innen öffnenden Ventilen zu verhindern und die Montage durchführen zu können, ohne den Ventilkörper gegen die Federkraft belasten zu müssen beziehungsweise bei nach außen öffnenden Ventilen, um den nachträglich anzubauenden Ventilkörper befestigen zu können.

Des Weiteren wird in der DE 101 25 094 A1 ein Abgasrückführventil offenbart, welches über einen Elektromotor mit nachgeschaltetem Zahnrad und Hebelgestänge angetrieben wird. Eine Feder belastet einen Exzenterbolzen am Zahnrad, an dem das Gestänge drehbeweglich befestigt ist. Durch Kippen des Zahnrades gegen einen Anschlag am Gehäuse außerhalb des Betriebsbereiches des Abgasrückführventils kann dieses arretiert werden.

Auch die DE 601 20 436 T2 offenbart eine Möglichkeit zur Arretierung eines Ventils, wobei dieses Ventil in den Endstellungen arretiert wird. Hierzu weist das Ventil eine Kolben- Zylindereinheit auf, in der beidseitig angeordnete Kolbenböden mittels eines Federelementes auseinandergedrückt werden. Hierdurch wird es möglich, den Aktor durch Zusammendrücken der Kolbenböden gegen die Federkraft über die Endstellung des Ventilkörpers hinaus zu drehen und dort in eine Arretierungsposition zu fahren, in der ein auf einem Exzenterbolzen angeordnetes Lager gegen eine federbelastete Scheibe in der Kulisse anliegt, wo der Exzenterbolzen durch die Federkraft gehalten wird.

Es stellt sich daher die Aufgabe, eine Ventilvorrichtung und ein Verfahren zur Montage einer derartigen Ventilvorrichtung zu schaffen, mit denen eine stabile Offenstellung des Ventils ohne eine Bestromung ermöglicht wird, um eine leichtere Montage mit einer Reduzierung des Risikos einer Beschädigung des Ventils zu erreichen.

Diese Aufgabe wird durch die Ventilvorrichtung mit Aktuator gemäß den Merkmalen des Hauptanspruchs gelöst. Dadurch, dass in einer Arretierungsstellung, in der der Ventilkörper beabstandet vom Ventilsitz angeordnet ist, der Exzenterausgangsbolzen oder ein auf dem Exzenterausgangsbolzen angeordnetes Lager durch das Federelement gegen einen Endanschlag der Kulisse belastet ist und gegen diesen Endanschlag der Kulisse anliegt, wobei der Exzenterausgangsbolzen in der Arretierungsstellung auf der den Betriebsstellungen gegenüberliegenden Seite der Achse, welche durch den unteren und den oberen Totpunkt des Exzenterausgangsbolzens verläuft, angeordnet ist, ist eine Arretierungsstellung ohne Bestromung des Aktuators oder manuellen Eingriff während der Montage möglich. Durch die Position des Exzenterausgangsbolzens in der Arretierungsstellung auf der den Betriebsstellungen gegenüberliegenden Seite der Achse durch den oberen und unteren Totpunkt des Exzenterausgangsbolzen wird der Ventilkörper in einer fest definierten Position beim Einbau der Ventilvorrichtung in das Strömungsgehäuse gehalten. Eine weitere Bewegung des Ventilkörpers wird verhindert und die Arretierungsstellung ist durch die Kraft des Federelements stabil, ohne dass zusätzliche Elemente notwendig sind, wodurch die Fertigungs- und Materialkosten reduziert sind.

Des Weiteren wird die Aufgabe durch ein Verfahren mit den Merkmalen des Hauptanspruchs 8 gelöst. Dadurch, dass das Zahnrad über den oberen Totpunkt in eine Arretierungsstellung gedreht wird, in der der Exzenterausgangsbolzen oder das auf dem Exzenterausgangsbolzen angeordnete Lager an einem Endanschlag der Kulisse anliegt und der Exzenterausgangsbolzen auf der den Betriebsstellungen gegenüberliegenden Seite der Achse, welche durch den unteren Totpunkt und oberen Totpunkt des Exzenterausgangsbolzens verläuft, liegt und in der der Ventilkörper beabstandet vom Ventilsitz angeordnet ist, wird erreicht, dass die Kraft des Federelementes die Ventilvorrichtung in der Arretierungsstellung stabil hält, ohne dass eine Bestromung oder ein manueller Eingriff notwendig ist, wodurch eine einfache Montage ohne elektrischen Anschluss für die Bestromung oder eines manuellen Eingriffes mit der Gefahr einer Beschädigung des Ventilkörpers ermöglicht wird.

Vorzugsweise ist der Drehwinkel des Zahnrades vom oberen Totpunkt zum Erreichen der Arretierungsstellung kleiner als der Drehwinkel vom oberen Totpunkt in umgekehrter Richtung zum Erreichen der zweiten Betriebsstellung. Dadurch ist in einem vorteilhaften Verfahren während des Einbaus in das Strömungsgehäuse der Ventilkörper vom Ventilsitz beabstandet, ohne dass eine Bestromung oder ein manueller Eingriff notwendig ist. Somit werden Beschädigungen vermieden, da der Ventilkörper keine Berührungspunkte mit dem Ventilsitz während der Montage hat. Vorzugsweise wird durch ein Zurückdrehen des Zahnrades über den oberen Totpunkt des Exzenterausgangsbolzen hinweg in entgegengesetzte Richtung der Ventilkörper zurück in die zweite Betriebsstellung gebracht, wodurch eine einfache Rückkehr zur Betriebsstellung nach erfolgter Montage möglich ist.

In einer vorteilhaften Ausführung weist die Kulisse eine Führungsbahn auf, die mit dem Exzenterausgangsbolzen zusammenwirkt, wodurch die Rotationsbewegung des Exzenterausgangsbolzen und des Zahnrades in einfacher Weise in eine translatorische Bewegung der Ventilstange umgewandelt wird.

Vorteilhaft ist eine senkrechte Ausrichtung der Führungsbahn zur Ventilstange, sodass die Kraft direkt in Bewegungsrichtung der Ventilstange eingebracht wird.

In einer vorteilhaften Ausführung ist auf dem Exzenterausgangsbolzen ein Lager angeordnet, wobei die Innenfläche auf dem Exzenterausgangsbolzen angeordnet ist und die Außenfläche in der Kulisse abläuft, wodurch die Reibung zwischen dem Exzenterausgangsbolzen und der Kulisse minimiert ist.

Besonders vorteilhaft ist die Verwendung eines Wälzlagers, wobei die Innenfläche durch einen Innenring und die Außenfläche durch einen Außenring gebildet ist, sodass ein verschleißarmes Lager verwendet wird, was zu einer erhöhten Lebensdauer der Ventilvorrichtung führt.

Vorzugsweise ist das Getriebe mindestens zweistufig ausgeführt, wodurch eine hohe Untersetzung erreicht wird, sodass eine sehr genaue Winkeleinstellung des Zahnrades möglich ist.

In einer vorteilhaften Ausführung des Verfahrens wird die Arretierungsstellung durch ein Überdrehen der Abtriebsglieder per Hand erreicht, da die Arretierungsstellung so während der Herstellung ohne eine Bestromung und ohne die Notwendigkeit eines elektrischen Anschlusses für die Bestromung erreicht wird und somit die Ventilvorrichtung schon bei Auslieferung fixiert werden kann.

In einer vorteilhaften Ausführung ist die Arretierungsstellung durch eine Betätigung des Aktuators erreichbar, sodass Beschädigungen des Ventilkörpers durch einen manuellen Eingriff vermieden werden und Bauraum eingespart wird, da kein Freiraum für einen manuellen Eingriff notwendig ist.

Vorteilhaft ist die Arretierungsstellung durch eine inverse Betätigung des Aktuators zu verlassen, sodass das Gehäuse der Stellvorrichtung für das Zurückdrehen nicht geöffnet sein muss, da kein manueller Eingriff notwendig ist.

Die Verwendung der Arretierungsstellung der Ventilvorrichtung mit Aktuator und des zugehörigen Verfahrens ermöglicht insgesamt eine einfache Montage ohne Bestromung oder manuellen Eingriff während des Einbaus in das Strömungsgehäuse, vermindert somit die Gefahr von Beschädigungen am Ventilkörper und führt zu einem beschleunigten Einbau, so dass Kosten eingespart werden.

Ein Ausführungsbeispiel einer erfindungsgemäßen Ventilvorrichtung mit einer vom Aktuator weg weisenden Schließrichtung ist in den Figuren dargestellt und wird nachfolgend beschrieben.

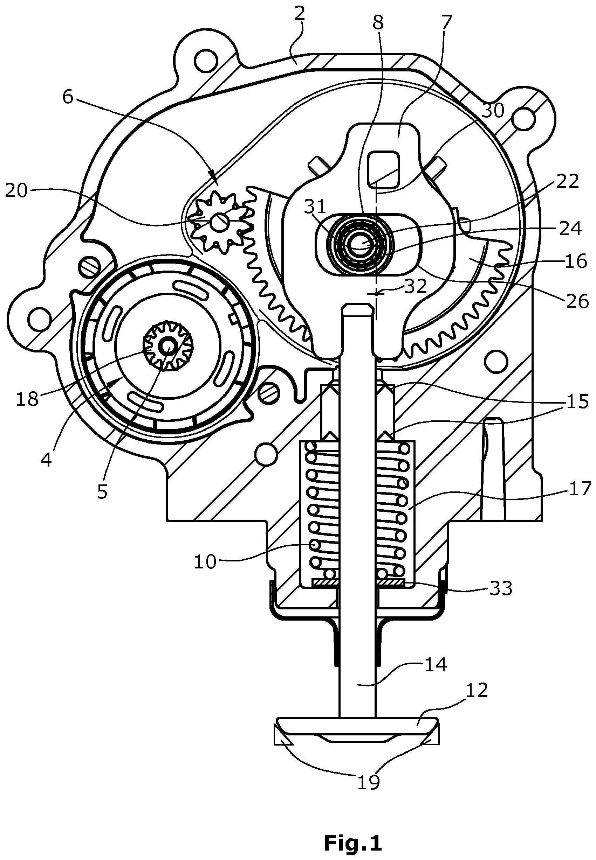

Die Figur 1 zeigt eine Seitenansicht der erfindungsgemäßen Ventilvorrichtung in geschnittener Darstellung, wobei sich die Ventilvorrichtung in einer ersten geschlossenen Betriebsstellung befindet.

Die Figur 2 zeigt die Vorrichtung aus Figur 1, wobei sich die Ventilvorrichtung in der Arretierungsstellung befindet.

Die Ventilvorrichtung besteht aus einem Gehäuse 2, in dem ein Aktuator, bestehend aus einem elektrischem Motor 4 mit einer Antriebswelle 5, einem Getriebe 6 und einem Kopplungselement 7 mit einer Kulisse 8, ein Federelement 10 und eine Ventilstange 14, angeordnet sind.

Das Getriebe 6 besteht aus einem Antriebsrad 18, das mit der Antriebswelle 5 verbunden ist, einem zweistufigem Getrieberad 20 und einem Abtriebszahnrad 16. Die Bewegung des Motors 4 wird auf das Antriebsrad 18 und über das Getrieberad 20 auf das Abtriebszahnrad 16 übertragen. Auf dem Abtriebszahnrad 16 ist dezentral ein Exzenterausgangsbolzen 22 befestigt. Der Exzenterausgangsbolzen 22 ist von einem Kugellager 24 umgeben, welches mit seiner Außenfläche in der Kulisse 8 des Kopplungselements 7 geführt wird. Die Kulisse 8 wirkt für den Exzenterausgangsbolzen 22 als Führungsbahn, welche senkrecht zur Ventilstange 14 ausgerichtet ist.

An der Ventilstange 14 ist ein Ventilkörper 12 befestigt, welcher mit einem Ventilsitz 19 eines nicht dargestellten Strömungsgehäuses zusammenwirkt, wobei die Ventilstange 14 mit dem Kopplungselement 7 verbunden ist. Der Ventilkörper 12 kann im Betrieb kontinuierlich zwischen einer ersten und einer zweiten Betriebsstellung bewegt werden. In der ersten Betriebsstellung, in der er einen maximalen Abstand zum Aktuator aufweist, sitzt er auf dem Ventilsitz 19 auf, um einen Durchströmungsquerschnitt zu verschließen und in der zweiten Betriebsstellung besteht eine maximale Öffnung des Durchströmungsquerschnitts bei minimalem Abstand zum Aktuator. Durch die Verbindung der Ventilstange 14 mit dem Kopplungselement 7 wird die rotatorische Bewegung des Motors 4 über den Exzenterausgangsbolzen 22 in eine translatorische Bewegung der Ventilstange 14 überführt. Dadurch ist der Ventilkörper 12 zwischen den beiden Betriebsstellungen kontinuierlich verstellbar. Diese beiden Betriebsstellungen liegen auf einer Seite einer Achse 30, die durch den oberen Totpunkt 31 und den unteren Totpunkt 32 des Exzenterausgangsbolzens 22 verläuft. Alle Betriebsstellungen liegen zwischen dem oberen Totpunkt 31 und dem unteren Totpunkt 32 auf dieser Seite der Achse.

Das Federelement 10 ist in einer Bohrung 17 des Gehäuses angeordnet, durch welche die Ventilstange 14 verläuft. Das Federelement 10 liegt gegen das Gehäuse 2 an und überträgt seine Kraft auf einen Federteller 33, welcher an der Ventilstange 14 befestigt ist, und weist eine Kraft in Richtung des unteren Totpunktes 32 des Exzenterausgangsbolzen 22 auf, wobei dies einer Kraft in Richtung Schließstellung des Ventilkörpers 12 entspricht. Das Federelement 10 umgibt die Ventilstange 14. Zwischen dem Getriebe 6 und dem Federelement 10 sind zwei Lippendichtringe 15 in der Bohrung 17 des Gehäuses 2 zur Abdichtung des Getriebes gegen ein Eindringen von Abgasen aus dem Strömungsgehäuse angeordnet.

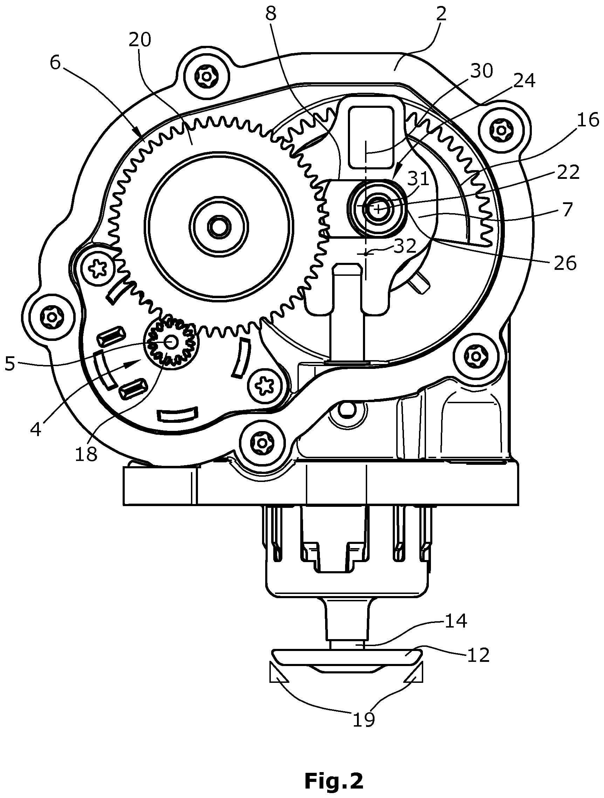

Durch eine Drehung des Motors 4 dreht sich das Abtriebszahnrad 16 und somit der Exzenterausgangsbolzen 22, wobei sich der Exzenterausgangsbolzen 22 innerhalb der Kulisse 8 bewegt. Vom unteren Totpunkt 32 aus bewegt sich der Exzenterausgangsbolzen 22 innerhalb der Kulisse 8 in die Richtung weg von einem Endanschlag 26 in der Kulisse 8. Nach einer Viertelumdrehung, entsprechend einer Position des Abtriebszahnrads mittig zwischen dem unteren Totpunkt 32 und dem oberen Totpunkt 31, der etwa der ersten Betriebsstellung entspricht, weist der Exzenterausgangsbolzen 22 den größten Abstand zum Anschlag 26 auf. Durch eine weitere Drehung des Abtriebszahnrads 16 in dieselbe Drehrichtung bewegt sich der Exzenterausgangsbolzen 22 in Richtung des Endanschlags 26. Durch ein Überdrehen des Abtriebszahnrads 16 über den oberen Totpunkt 31 und damit über die zweite Betriebsstellung hinaus, welche vor dem oberen Totpunkt erreicht wird, bewegt die Kraft des Federelementes 10 den Exzenterausgangsbolzen 22 weiter in Richtung des Endanschlags 26 bis das den Exzenterausgangsbolzen 22 umgebene Kugellager 24 den Endanschlag 26 berührt. Durch die entsprechende anliegende Kraft des Federelementes 10 befindet sich die Ventilstange 14 mit dem Ventilkörper 12 in einer festgelegten Position, so dass eine Bewegung des Abtriebszahnrads 16 und somit der Ventilstange 14 und des Ventilkörpers 12 nicht möglich ist, ohne von außen zusätzliche Kräfte in entgegengesetzter Richtung aufzubringen. Diese Arretierungsstellung ist in Figur 2 gezeigt.

Figur 2 zeigt eine Schnittansicht der erfindungsgemäßen Vorrichtung in der Arretierungsstellung, in welcher das Kugellager 24, welche den Exzenterausgangsbolzen 22 umgibt, gegen den Endanschlag in der Kulisse 8 anliegt. Die Kraft des Federelementes 10 weist in Richtung des unteren Totpunkts 31 und fixiert somit die Ventilvorrichtung in der Arretierungsstellung. Der Ventilkörper 12 ist in dieser Stellung beabstandet vom Ventilsitz 19 angeordnet, sodass ein einfacher Einbau der Ventilvorrichtung in ein Strömungsgehäuse ohne Bestromung möglich ist.

Durch diesen Aufbau der Stellvorrichtung ist es möglich, eine Offenstellung des Ventils in einer stabilen Arretierungsstellung der Stellvorrichtung zu erreichen, wodurch eine einfache Montage der Ventilvorrichtung in einem Strömungsgehäuse ermöglicht wird, die Gefahr einer Beschädigung des Ventilkörpers durch einen manuellen Eingriff oder einer fehlenden Bestromung während des Einbaus reduziert wird und eine kompakte Bauweise mit geringem Bauraumbedarf erreicht wird.

Es sollte deutlich sein, dass verschiedene konstruktive Modifikationen im Vergleich zu der beschriebenen Ausführungsform möglich sind, ohne den Schutzbereich des Hauptanspruchs zu verlassen. So kann beispielsweise anstatt des Endanschlages in der Kulisse für den Exzenterausgangsbolzen ein Anschlag für das Abtriebszahnrad innerhalb des Gehäuses ausgebildet werden. Auch muss die Kulisse nicht unbedingt senkrecht zur Ventilstange ausgebildet werden, sondern kann auch schräg sein. Auch andere Abdichtungen der Ventilstange sind möglich.

## Patentansprüche

1. Ventilvorrichtung mit einem Aktuator, welcher einen Elektromotor (4) und ein Getriebe (6), welches als Abtriebsglieder zumindest ein Zahnrad (16) mit einem dezentral gelagerten Exzenterausgangsbolzen (22) und eine Kulisse (8), die mit dem Exzenterausgangsbolzen (22) zusammenwirkt, aufweist, und eine mit der Kulisse (8) direkt verbundene Ventilstange (14) umfasst, an der ein Ventilkörper (12) befestigt ist, der über ein Federelement (10) vorgespannt ist und durch Betätigung des Aktuators gegen die Vorspannrichtung des Federelements (10) axial bewegbar ist, wobei der Ventilkörper (12) im Betrieb zwischen einer ersten Betriebsstellung, in der der Ventilkörper (12) einen maximalen Abstand zum Aktuator aufweist und einer zweiten Betriebsstellung, in der der Ventilkörper (12) einen minimalen Abstand zum Aktuator aufweist, bewegbar ist, wobei alle Betriebsstellungen des Exzenterausgangsbolzens (22) zwischen einem unteren Totpunkt (32) und einem oberen Totpunkt (31) auf einer Seite einer Achse (30) liegen, welche durch den unteren Totpunkt (32) und den oberen Totpunkt (31) des Exzenterausgangsbolzens (22) verläuft,
wobei in einer Arretierungsstellung, in der der Ventilkörper (12) beabstandet vom Ventilsitz (19) angeordnet ist, der Exzenterausgangsbolzen (22) oder ein auf dem Exzenterausgangsbolzen (22) angeordnetes Lager (24) durch das Federelement (10) gegen einen Endanschlag (26) der Kulisse (8) belastet ist und gegen diesen Endanschlag (26) der Kulisse (8) anliegt, wobei der Exzenterausgangsbolzen (22) in der Arretierungsstellung auf der den Betriebsstellungen gegenüberliegenden Seite der Achse (30), welche durch den unteren Totpunkt (32) und den oberen Totpunkt (31) des Exzenterausgangsbolzens (22) verläuft, angeordnet ist.

2. Ventilvorrichtung mit einem Aktuator nach Anspruch 1,
**dadurch gekennzeichnet, dass**
der Drehwinkel des Zahnrads (16) vom oberen Totpunkt (31) zum Erreichen der Arretierungsstellung kleiner ist als der Drehwinkel vom oberen Totpunkt (31) in umgekehrter Richtung zum Erreichen der zweiten Betriebsstellung.

3. Ventilvorrichtung mit einem Aktuator nach Anspruch 1 bis 2,
**dadurch gekennzeichnet, dass**
die Kulisse (8) eine Führungsbahn aufweist, die mit dem Exzenterausgangsbolzen (22) zusammenwirkt.

4. Ventilvorrichtung mit einem Aktuator nach Anspruch 3,
**dadurch gekennzeichnet, dass**
sich die Führungsbahn senkrecht zur Ventilstange (14) erstreckt.

5. Ventilvorrichtung mit einem Aktuator nach einem der vorhergehenden Ansprüche,
**dadurch gekennzeichnet, dass**
auf dem Exzenterausgangsbolzen (22) das Lager (24) angeordnet ist, welches mit der Innenfläche auf dem Exzenterausgangsbolzen (22) angeordnet ist und mit der Außenfläche in der Kulisse (8) abläuft.

6. Ventilvorrichtung mit einem Aktuator nach Anspruch 5,
**dadurch gekennzeichnet, dass**
das Lager (24) ein Wälzlager ist, wobei die Innenfläche durch einen Innenring und die Außenfläche durch einen Außenring gebildet ist.

7. Ventilvorrichtung mit einem Aktuator nach einem der vorhergehenden Ansprüche,
**dadurch gekennzeichnet, dass**
das Getriebe (6) mindestens zweistufig ausgeführt ist.

8. Verfahren zur Montage einer Ventilvorrichtung nach einem der vorhergehenden Ansprüche in einem Strömungsgehäuse mit einem am Strömungsgehäuse ausgebildeten Ventilsitz (19),
wobei das Zahnrad (16) über den oberen Totpunkt (31) in eine Arretierungsstellung gedreht wird, in der der Exzenterausgangsbolzen (22) oder das auf dem Exzenterausgangsbolzen (22) angeordnete Lager (24) an einem Endanschlag (26) der mit der Ventilstange (14) direkt verbundenen Kulisse (8) anliegt und der Exzenterausgangsbolzen (22) auf der den Betriebsstellungen gegenüberliegenden Seite der Achse, welche durch den unteren Totpunkt (32) und oberen Totpunkt (31) des Exzenterausgangsbolzens (22) verläuft, liegt und in der der Ventilkörper (12) beabstandet vom Ventilsitz (19) angeordnet ist.

9. Verfahren zur Montage einer Ventilvorrichtung in einem Strömungsgehäuse mit Ventilsitz nach Anspruch 8,
**dadurch gekennzeichnet, dass**
der Ventilkörper (12) während des Einbaus in das Strömungsgehäuse vom Ventilsitz (19) beabstandet ist und durch Zurückdrehen des Zahnrades (16) über den oberen Totpunkt (31) hinweg in entgegengesetzter Richtung in die zweite Betriebsstellung gebracht wird.

10. Verfahren zur Montage einer Ventilvorrichtung in einem Strömungsgehäuse mit Ventilsitz nach einem der Ansprüche 8 oder 9,
**dadurch gekennzeichnet, dass**
die Arretierungsstellung durch ein Überdrehen der Abtriebsglieder (8, 16, 22) per Hand erreicht wird.

11. Verfahren zur Montage einer Ventilvorrichtung in einem Strömungsgehäuse mit Ventilsitz nach den Ansprüchen 8 oder 9,
**dadurch gekennzeichnet, dass**
die Arretierungsstellung durch eine Betätigung des Aktuators (4) erreicht wird.

12. Verfahren zur Montage einer Ventilvorrichtung in einem Strömungsgehäuse mit Ventilsitz nach einem der Ansprüche 8 bis 11,
**dadurch gekennzeichnet, dass**
die Arretierungsstellung durch eine inverse Betätigung des Aktuators (4) verlassen wird.

## Claims

1. Valve device with an actuator,
which comprises an electric motor (4) and a gear unit (6), which comprises as output members at least one gear wheel (16) with a decentrally supported eccentric output pin (22) and a slotted link (8), which cooperates with the eccentric output pin (22),
and a valve rod (14), which is directly connected to the slotted link (8) and to which a valve body (12) is attached, which is prestressed via a spring element (10) and can be moved axially opposite to the prestressing direction of the spring element (10) by actuating the actuator,
the valve body (12) being movable in operation between a first operating position, in which the valve body (12) comprises a maximum distance from the actuator, and a second operating position, in which the valve body (12) comprises a minimum distance from the actuator, wherein all operating positions of the eccentric output pin (22) between a bottom dead centre (32) and a top dead centre (31) lie on one side of an axis (30) which passes through the bottom dead centre (32) and the top dead centre (31) of the eccentric output pin (22), wherein in a locking position in which the valve body (12) is spaced from the valve seat (19) the eccentric outlet pin (22) or a bearing (24) arranged on the eccentric outlet pin (22) is loaded by the spring element (10) against an end stop (26) of the slotted link (8) and bears against this end stop (26) of the slotted link (8),
wherein the eccentric output pin (22) is arranged in the locking position on the side of the axis (30) opposite the operating positions, which axis passes through the bottom dead centre (32) and the top dead centre (31) of the eccentric output pin (22).

2. Valve device with an actuator according to claim 1,
**characterized in that**
the angle of rotation of the gear wheel (16) from the top dead centre (31) to reach the locking position is smaller than the angle of rotation from the top dead centre (31) in the opposite direction to reach the second operating position.

3. Valve device with an actuator according to claim 1 to 2,
**characterized in that**
the slotted link (8) comprises a guideway which cooperates with the eccentric output pin (22).

4. Valve device with an actuator according to claim 3,
**characterized in that**
the guideway extends perpendicularly to the valve rod (14).

5. Valve device with an actuator according to one of the preceding claims, **characterized in that**
the bearing (24) is arranged on the eccentric output pin (22), which bearing is arranged with the inner surface on the eccentric output pin (22) and runs with the outer surface in the slotted link (8).

6. Valve device with an actuator according to claim 5,
**characterized in that**
the bearing (24) is a roller bearing, the inner surface being defined by an inner ring and the outer surface being defined by an outer ring.

7. Valve device with an actuator according to one of the preceding claims,
**characterized in that**
the gear unit (6) is configured with at least two stages.

8. Method of mounting a valve device according to any one of the preceding claims in a flow housing having a valve seat (19) formed on the flow housing,
wherein the gear (16) is rotated beyond the top dead centre (31) into a locking position, in which the eccentric output pin (22) or the bearing (24) arranged on the eccentric output pin (22) rests against an end stop (26) of the slotted link (8) directly connected to the valve rod (14), and the eccentric output pin (22) rests on the side of the axis (30) opposite the operating positions, which passes through the bottom dead centre (32) and the top dead centre (31) of the eccentric output pin (22) and in which the valve body (12) is arranged at a distance from the valve seat (19).

9. Method of mounting a valve device in a flow housing with a valve seat according to claim 8,
**characterized in that**
the valve body (12) is spaced from the valve seat (19) during installation in the flow housing and is brought into the second operating position by turning back the gear wheel (16) in the opposite direction beyond the top dead centre (31).

10. Method of mounting a valve device in a flow housing with a valve seat according to one of claims 8 or 9,
**characterized in that**
the locking position is achieved by manually over-turning the output members (8, 16, 22).

11. Method for mounting a valve device in a flow housing with valve seat according to claims 8 or 9,
**characterized in that**
the locking position is achieved by actuating the actuator (4).

12. Method for mounting a valve device in a flow housing with valve seat according to any one of claims 8 to 11,
**characterized in that**
the locking position is left by an inverse actuation of the actuator (4).

## Revendications

1. Dispositif de vanne avec un actuateur,
qui comprend un moteur électrique (4) et un réducteur (6), qui comprend comme éléments de sortie au moins une roue dentée (16) avec un axe de sortie excentrique (22) supporté de manière décentralisée et une coulisse (8), qui coopère avec l'axe de sortie excentrique (22),
et une tige de soupape (14), qui est directement connectée à la coulisse (8) et à laquelle est fixé un corps de soupape (12), qui est précontraint par l'intermédiaire d'un élément de ressort (10) et peut être déplacé axialement à l'opposé de la direction de précontrainte de l'élément de ressort (10) en actionnant l'actionneur,
le corps de soupape (12) étant mobile en fonctionnement entre une première position de fonctionnement, dans laquelle le corps de soupape (12) comprend une distance maximale de l'actionneur, et une deuxième position de fonctionnement, dans laquelle le corps de soupape (12) comprend une distance minimale de l'actionneur,
dans lequel toutes les positions de fonctionnement de l'axe de sortie excentrique (22) entre un point mort bas (32) et un point mort haut (31) se trouvent sur un côté d'un axe (30) qui passe par le point mort bas (32) et le point mort haut (31) de l'axe de sortie excentrique (22), dans laquelle, dans une position de verrouillage dans laquelle le corps de soupape (12) est écarté du siège de soupape (19), l'axe de sortie excentrique (22) ou un palier (24) disposé sur l'axe de sortie excentrique (22) est chargé par l'élément de ressort (10) contre une butée (26) de la coulisse (8) et s'appuie contre cette butée (26) de la coulisse (8),
dans lequel le goujon de sortie excentrique (22) est disposé en position de verrouillage du côté de l'axe (30) opposé aux positions de fonctionnement, lequel axe passe par le point mort bas (32) et le point mort haut (31) du goujon de sortie excentrique (22).

2. Dispositif de vanne avec un actuateur selon la revendication 1,
**caractérisé en ce que**
l'angle de rotation de la roue dentée (16) à partir du point mort haut (31) pour atteindre la position de verrouillage est inférieur à l'angle de rotation à partir du point mort haut (31) dans le sens opposé pour atteindre la deuxième position de fonctionnement.

3. Dispositif de vanne avec un actuateur selon les revendications 1 à 2,
**caractérisé en ce que**
la coulisse (8) comprend une glissière qui coopère avec l'axe de sortie excentrique (22).

4. Dispositif de vanne avec un actionneur selon la revendication 3,
**caractérisé en ce que**
la glissière s'étend perpendiculairement à la tige de soupape (14).

5. Dispositif de vanne avec un actionneur selon l'une des revendications précédentes,
**caractérisé en ce que**
le palier (24) est disposé sur l'axe de sortie excentrique (22), lequel palier est disposé avec la surface intérieure sur l'axe de sortie excentrique (22) et tourne avec la surface extérieure dans la coulisse (8).

6. Dispositif de vanne avec un actionneur selon la revendication 5,
**caractérisé en ce que**
le palier (24) est un palier à rouleaux, la surface intérieure étant définie par une bague intérieure et la surface extérieure étant définie par une bague extérieure.

7. Dispositif de vanne avec un actionneur selon l'une des revendications précédentes,
**caractérisé en ce que**
le réducteur (6) est configuré avec au moins deux étages.

8. Méthode de montage d'un dispositif de vanne selon l'une quelconque des revendications précédentes dans un boîtier d'écoulement comportant un siège de vanne (19) formé sur le boîtier d'écoulement, dans lequel le roue dentée (16) est tourné au-delà du point mort haut (31) dans une position de verrouillage, dans laquelle l'axe de sortie excentrique (22) ou le palier (24) disposé sur l'axe de sortie excentrique (22) repose contre une butée (26) de la coulisse (8) directement reliée à la tige de soupape (14), et l'axe de sortie excentrique (22) repose sur le côté de l'axe (30) opposé aux positions de fonctionnement, qui passe par le point mort bas (32) et le point mort haut (31) de l'axe de sortie excentrique (22) et dans lequel le corps de soupape (12) est disposé à distance du siège de soupape (19).

9. Méthode de montage d'un dispositif de vanne dans un boîtier d'écoulement avec un siège de soupape selon la revendication 8,
**caractérisé en ce que**
le corps de soupape (12) est disposé à distance du siège de soupape (19) lors du montage dans le boîtier d'écoulement et est amené dans la deuxième position de fonctionnement par retournement de la roue dentée (16) en sens inverse au-delà du point mort haut (31).

10. Méthode de montage d'un dispositif de vanne dans un boîtier d'écoulement avec un siège de vanne selon l'une des revendications 8 ou 9,
**caractérisé en ce que**
la position de verrouillage est obtenue par un retournement manuel des organes de sortie (8, 16, 22).

11. Méthode de montage d'un dispositif de vanne dans un boîtier d'écoulement avec siège de vanne selon les revendications 8 ou 9,
**caractérisé en ce que**
la position de verrouillage est obtenue par actionnement de I' actuateur (4).

12. Méthode de montage d'un dispositif de vanne dans un logement d'écoulement avec siège de vanne selon l'une quelconque des revendications 8 à 11,
**caractérisé en ce que**
la position de verrouillage est laissée par un actionnement inverse de I' actuateur (4).
